# EUROPEAN PATENT APPLICATION

(11) **EP 4 841 850 A1**
(43) Date of publication of application: **18.11.2026**
(21) Application number: 26175046.7
(22) Date of filing: 28.04.2026
(51) Int. Cl.: H02J 3/32, H02J 1/102, H02J 3/38, H02J 7/50, H02J 101/24

(54) **ENERGY STORAGE CABINET, BATTERY PACK, PHOTOVOLTAIC ENERGY STORAGE SYSTEM, AND ENERGY STORAGE SYSTEM**

(30) Priority: 16.05.2025 CN 202510637860
(71) Applicant: HUAWEI TECHNOLOGIES CO., LTD., Shenzhen 518129 (CN)
(72) Inventor: CHEN, Baoguo, Shenzhen, 518129 (CN); HE, Ye, Shenzhen, 518129 (CN); PENG, Zhenyue, Shenzhen, 518129 (CN)
(74) Representative: Epping - Hermann - Fischer

(57) **Abstract**

This application provides an energy storage cabinet, a battery pack, a photovoltaic energy storage system, and an energy storage system, and pertains to the field of energy storage technologies. In the solutions provided in this application, an auxiliary power supply can obtain electric energy from a power supply and supply power to a charging circuit in the battery pack, and the charging circuit can charge a battery module when a DC/DC conversion circuit stops operating and a voltage of the battery module in the battery pack is low. In addition, a charging current output by the charging circuit is greater than a leakage current of the battery module, and is less than a charging current output by the DC/DC conversion circuit when the DC/DC conversion circuit operates. Based on this, even if the DC/DC conversion circuit cannot operate normally due to a fault of a photovoltaic inverter, or in a scenario with insufficient illumination, the DC/DC conversion circuit cannot operate normally due to an excessively low voltage or power of a direct current bus, the charging circuit can still charge the battery module in time based on the electric energy provided by the auxiliary power supply, to avoid overdischarge of the battery module due to long-term lack of charging.

## Description

### TECHNICAL FIELD

This application relates to the field of energy storage technologies, and in particular, to an energy storage cabinet, a battery pack, a photovoltaic energy storage system, and an energy storage system.

### BACKGROUND

A residential photovoltaic energy storage system generally includes a battery pack (pack) and a photovoltaic inverter. The photovoltaic inverter includes a maximum power point tracking (MPPT) circuit and a direct current/alternating current (DC/AC) conversion circuit. One end of the MPPT circuit is configured to connect to a photovoltaic panel, and the other end is configured to connect to a direct current end of the DC/AC conversion circuit (also referred to as an inverter circuit) through a direct current bus. An alternating current end of the DC/AC conversion circuit is configured to connect to a power grid. The battery pack includes a bidirectional DC/DC conversion circuit and a plurality of battery modules connected in series. One end of the bidirectional DC/DC conversion circuit is connected to the direct current bus, and the other end is connected to the plurality of battery modules. The bidirectional DC/DC conversion circuit is configured to charge and discharge the plurality of battery modules under scheduling of the photovoltaic inverter.

When the photovoltaic inverter is faulty or cannot operate normally due to insufficient illumination, the bidirectional DC/DC conversion circuit in the battery pack cannot normally charge the battery modules in the battery pack. As a result, the battery modules are overdischarged due to long-term lack of charging.

### SUMMARY

This application provides an energy storage cabinet, a battery pack, a photovoltaic energy storage system, and an energy storage system, to resolve a technical problem that when a photovoltaic inverter is faulty or cannot run normally in a scenario with insufficient illumination, a bidirectional DC/DC conversion circuit cannot normally charge a battery module in the battery pack, and consequently the battery module is overdischarged.

According to a first aspect, an energy storage cabinet is provided. The energy storage cabinet includes an auxiliary power supply and a plurality of battery packs. Each of the plurality of battery packs includes a battery module, a DC/DC conversion circuit, and a charging circuit. One end of the DC/DC conversion circuit is configured to connect to a direct current bus, and the other end is connected to the battery module. An input end of the auxiliary power supply is configured to connect to a power supply, an output end of the auxiliary power supply is connected to an input end of the charging circuit, and an output end of the charging circuit is connected to the battery module. The auxiliary power supply is configured to obtain electric energy from the power supply and supply power to the charging circuit. When the DC/DC conversion circuit stops operating and a voltage of the battery module is lower than a first threshold, the charging circuit is configured to charge the battery module. A charging current output by the charging circuit to the battery module is greater than a leakage current of the battery module, and the charging current output by the charging circuit to the battery module is less than a charging current output by the DC/DC conversion circuit to the battery module when the DC/DC conversion circuit operates.

It may be understood that the leakage current is also referred to as a self-discharge current, and is a small continuous discharge current caused by a physical or chemical characteristic inside the battery module when the battery module is not connected to an external load (or is in an open-circuit state). It may be further understood that, when the DC/DC conversion circuit runs normally, the DC/DC conversion circuit is configured to obtain electric energy from the direct current bus and charge the battery module, or is configured to transmit electric energy of the battery module to the direct current bus, to discharge the battery module. In other words, the DC/DC conversion circuit is a bidirectional DC/DC conversion circuit that can implement bidirectional energy transmission. The direct current bus is further configured to connect to a direct current end of a DC/AC conversion circuit, and an alternating current end of the DC/AC conversion circuit is configured to connect to a power grid or a load. The direct current bus may further be connected to one end of an MPPT circuit, and the other end of the MPPT circuit is configured to connect to a photovoltaic panel. The power supply connected to the auxiliary power supply may be the direct current bus, the photovoltaic panel, or the power grid.

The energy storage cabinet provided in this application includes the auxiliary power supply, and the battery pack includes the charging circuit. The auxiliary power supply can obtain the electric energy from the power supply and supply power to the charging circuit. The charging circuit can charge the battery module when the DC/DC conversion circuit stops operating and the voltage of the battery module is low. In addition, the charging current output by the charging circuit is greater than the leakage current of the battery module. Therefore, when the DC/DC conversion circuit stops operating, the battery module can be charged in time, to effectively compensate for the leakage current of the battery module, avoid overdischarge caused by self-discharge of the battery module in a scenario in which the battery module has not been charged for a long time, and avoid subsequent performance deterioration.

It may be further understood that running of the auxiliary power supply does not depend on scheduling of the photovoltaic inverter. Therefore, the DC/DC conversion circuit cannot operate normally because the photovoltaic inverter is faulty, the auxiliary power supply can supply power to the charging circuit provided that the auxiliary power supply can obtain electric energy from the power supply, to ensure that the charging circuit charges the battery module. It may be further understood that an input voltage range of the auxiliary power supply is wide, and power of the auxiliary power supply is low. Therefore, when the photovoltaic inverter cannot operate normally due to insufficient photovoltaic energy, which results in a low voltage and low power of the direct current bus and prevents the DC/DC conversion circuit from operating normally, the auxiliary power supply can still operate normally. Correspondingly, the auxiliary power supply can supply power to the charging circuit. In addition, the charging current output by the charging circuit is less than the charging current output by the DC/DC conversion circuit to the battery module when the DC/DC conversion circuit operates. In other words, the charging current output by the charging circuit is small, to ensure that the charging circuit can still effectively charge the battery module when output power of the auxiliary power supply is low.

Optionally, the first threshold is greater than a discharge cut-off voltage (DCV) of the battery module. The discharge cut-off voltage is also referred to as an end voltage, and is a minimum voltage value that is allowed to be reached by the battery module in a discharging process. Setting the first threshold to be greater than the discharge cut-off voltage can ensure that the charging circuit charges the battery module in time before the voltage of the battery module drops to the discharge cut-off voltage, thereby avoiding irreversible damage to the battery module caused by deep discharge. Optionally, the DC/DC conversion circuit stops operating when a voltage of the direct current bus is lower than a minimum startup voltage of the DC/DC conversion circuit, or when power of the direct current bus is lower than minimum startup power of the DC/DC conversion circuit. In addition, a minimum startup voltage of the auxiliary power supply is lower than the minimum startup voltage of the DC/DC conversion circuit, and minimum startup power of the auxiliary power supply is lower than the minimum startup power of the DC/DC conversion circuit.

Therefore, it can be ensured that when the power supply connected to the auxiliary power supply is the direct current bus (also referred to as a high-voltage bus), and the DC/DC conversion circuit stops operating because the voltage or power of the direct current bus is low, the auxiliary power supply can still operate normally and supply power to the charging circuit, to ensure that the charging circuit can charge the battery module. It may be understood that, when the power supply connected to the auxiliary power supply is the photovoltaic panel or the power grid, because the auxiliary power supply can directly be powered by the photovoltaic panel or the power grid, when the DC/DC conversion circuit stops operating, the auxiliary power supply can still be powered by the photovoltaic panel or the power grid and supply power to the charging circuit.

Optionally, the charging current is less than or equal to 0.2 A. For example, the charging current may be less than or equal to 0.1 A. As described above, the leakage current of the battery module is small, and is usually at a uA level. Therefore, the charging current output by the charging circuit to the battery module may also be designed to be small. In this way, charging power of the charging circuit can be effectively reduced on the premise that the leakage current is effectively compensated, to ensure that the charging circuit can still charge the battery module by using a small charging current when the output power of the auxiliary power supply is low.

Optionally, the charging circuit is further configured to stop charging the battery module when the voltage of the battery module reaches a second threshold. The second threshold is less than a rated voltage of the battery module, and is greater than or equal to the first threshold. In other words, before the voltage of the battery module reaches the rated voltage, the charging circuit may stop charging the battery module.

Because the charging current of the charging circuit is small, when the voltage of the battery module is greater than or equal to the second threshold, and the charging circuit continues to charge the battery module, effect of improving performance of the battery module is not significant. Correspondingly, in the solutions provided in this application, the charging circuit can stop charging the battery module when the voltage of the battery module reaches the second threshold. In other words, the charging circuit can stop charging provided that it is ensured that the battery module is not overdischarged, to avoid unnecessary power consumption.

Optionally, the charging voltage output by the charging circuit to the battery module is less than or equal to the rated voltage of the battery module. Therefore, it can be effectively avoided that the battery module is overcharged when the charging circuit charges the battery module.

Optionally, the energy storage cabinet further includes a control box, where the control box includes a housing and a battery control unit (BCU), and both the auxiliary power supply and the BCU are located in the housing. In addition, the BCU is electrically connected to the battery pack, and the BCU is further electrically connected to the auxiliary power supply.

It may be understood that the BCU usually includes a switch unit, and one end of the DC/DC conversion circuit in the battery pack is connected to the direct current bus through the switch unit. The auxiliary power supply in the control box is configured to supply power to the BCU, for example, configured to supply power to a sampling circuit, a control circuit, a drive circuit, and a protection circuit in the BCU. According to the solutions provided in this application, an auxiliary power supply of the BCU can be reused to supply power to the charging circuit in the battery pack, to charge the battery module. This can effectively avoid increasing structural complexity and hardware costs of the energy storage cabinet.

Optionally, the auxiliary power supply is located in the battery pack. In the solutions provided in this application, the auxiliary power supply may alternatively be located in the battery pack, and the auxiliary power supply is configured to supply power to a sampling circuit, a control circuit, a drive circuit, a protection circuit, and the like in the battery pack. According to the solutions provided in this application, the auxiliary power supply in the battery pack can be reused to supply power to the charging circuit in the battery pack, to charge the battery module. This can effectively avoid increasing structural complexity and hardware costs of the battery pack.

Optionally, the charging circuit includes at least one of a voltage limiting circuit, a current limiting circuit, and an anti-reverse circuit. The voltage limiting circuit is also referred to as a voltage regulator circuit, and is configured to limit a charging voltage output to the battery module, to implement voltage-limited charging on the battery module and avoid overcharging the battery module. For example, the voltage limiting circuit can limit the charging voltage output to the battery module to be less than or equal to the rated voltage of the battery module. The current limiting circuit is configured to limit a charging current output to the battery module, to implement current-limited charging on the battery module. For example, the current limiting circuit can limit the charging current output to the battery module to be greater than the leakage current of the battery module and less than or equal to 0.2 A. If the charging circuit includes the voltage limiting circuit and the current limiting circuit, power-limited charging can be implemented on the battery module, to ensure that power output by the charging circuit to the battery module is small, thereby avoiding affecting control logic of the DC/DC conversion circuit. The anti-reverse circuit is configured to control unidirectional transmission of electric energy from the input end of the charging circuit to the output end of the charging circuit. That is, the anti-reverse circuit can prevent the battery module from discharging reversely. In this way, overdischarge of the battery module can be effectively avoided.

Optionally, the charging circuit includes the voltage limiting circuit, the current limiting circuit, and the anti-reverse circuit that are sequentially connected between the input end and the output end of the charging circuit. In this way, the charging circuit can implement voltage-limited charging, current-limited charging, and power-limited charging on the battery module, and can prevent the battery module from discharging. The voltage limiting circuit includes a capacitor, a first transistor, a voltage regulator chip, a first resistor, a second resistor, and a third resistor. The capacitor is connected between a positive electrode and a negative electrode of the input end of the charging circuit. A collector of the first transistor is connected to the positive electrode of the input end of the charging circuit. A base of the first transistor is connected to a cathode of the voltage regulator chip. An anode of the voltage regulator chip is connected to the negative electrode of the input end of the charging circuit. The first resistor is connected between the positive electrode of the input end of the charging circuit and the base of the first transistor. The second resistor and the third resistor are connected in series between an emitter of the first transistor and the negative electrode of the input end of the charging circuit, and a series node between the second resistor and the third resistor is connected to a reference electrode of the voltage regulator chip. The current limiting circuit includes a fourth resistor, a second transistor, a fifth resistor, a first diode, and a second diode. The fourth resistor is connected between the emitter of the first transistor and an emitter of the second transistor. A base of the second transistor is connected to the negative electrode of the input end of the charging circuit through the fifth resistor. The first diode and the second diode are connected in series between the emitter of the first transistor and the base of the second transistor. The anti-reverse circuit includes a third diode. An anode of the third diode is connected to a collector of the second transistor, and a cathode of the third diode is configured to connect to the battery module.

The charging circuit provided in this application is a pure hardware circuit, and has a simple structure. This can effectively avoid increasing structural complexity and hardware costs of the power conversion apparatus. In addition, a process in which the charging circuit obtains power from the auxiliary power supply and charges the battery module does not need to be scheduled by the photovoltaic inverter, is not affected by an operating status of the photovoltaic inverter, and does not affect the control logic of the DC/DC conversion circuit. In this way, not only control complexity is effectively reduced, but also it can be ensured that the charging circuit can still charge the battery module when the photovoltaic inverter is faulty.

Optionally, the charging circuit further includes a switch circuit, where the switch circuit is configured to disconnect a path between the input end and the output end of the charging circuit when the voltage limiting circuit, the current limiting circuit, or the anti-reverse circuit is faulty, that is, disconnect a charging loop of the charging circuit.

It may be understood that, when the voltage limiting circuit is faulty, the battery module may be overcharged. Therefore, disconnecting the charging loop of the charging circuit by using the switch circuit can implement overcharge protection for the battery module. When the current limiting circuit is faulty, the charging current may be excessively large, and consequently, charging cannot be effectively performed or the control logic of the DC/DC conversion circuit is affected. Therefore, the charging loop of the charging circuit can also be disconnected by using the switch circuit. When the anti-reverse circuit is faulty, the battery module may be reversely discharged. Therefore, disconnecting the path between the input end and the output end of the charging circuit by using the switch circuit can also prevent the battery module from discharging.

Optionally, the switch circuit includes a third transistor. A base of the third transistor is configured to receive a control signal, a collector of the third transistor is connected to the base of the second transistor through the fifth resistor, and an emitter of the third transistor is connected to the negative electrode of the input end of the charging circuit. In a normal case, the control signal can be used to control the third transistor to be turned on. In a faulty scenario (for example, when the first transistor in the voltage limiting circuit is short-circuited), the control signal can be used to control the third transistor to be turned off. After the third transistor is turned off, the second transistor **in** the current limiting circuit is also turned off, so that the path between the input end and the output end of the charging circuit can be disconnected.

According to a second aspect, a battery pack is provided. The battery pack includes an auxiliary power supply, a battery module, a DC/DC conversion circuit, and a charging circuit. One end of the DC/DC conversion circuit is configured to connect to a direct current bus, and the other end is connected to the battery module. An input end of the auxiliary power supply is configured to connect to a power supply, an output end of the auxiliary power supply is connected to an input end of the charging circuit, and an output end of the charging circuit is connected to the battery module. The auxiliary power supply is configured to obtain electric energy from the power supply and supply power to the charging circuit. When the DC/DC conversion circuit stops operating and a voltage of the battery module is lower than a first threshold, the charging circuit is configured to charge the battery module. A charging current output by the charging circuit to the battery module is greater than a leakage current of the battery module, and the charging current output by the charging circuit to the battery module is less than a charging current output by the DC/DC conversion circuit to the battery module when the DC/DC conversion circuit operates.

The battery pack provided in this application includes the charging circuit. The auxiliary power supply can obtain the electric energy from the power supply and supply power to the charging circuit, and the charging circuit can charge the battery module when the DC/DC conversion circuit stops operating and the voltage of the battery module is low. In addition, the charging current output by the charging circuit is small, and is greater than the leakage current of the battery module. In this way, the battery module can be charged in a timely and effective manner, to avoid overdischarge of the battery module due to long-term lack of charging, and avoid subsequent performance deterioration.

Optionally, the first threshold is greater than a discharge cut-off voltage of the battery module.

Optionally, the DC/DC conversion circuit stops operating when a voltage of the direct current bus is lower than a minimum startup voltage of the DC/DC conversion circuit, or when power of the direct current bus is lower than minimum startup power of the DC/DC conversion circuit. In addition, a minimum startup voltage of the auxiliary power supply is lower than the minimum startup voltage of the DC/DC conversion circuit, and minimum startup power of the auxiliary power supply is lower than the minimum startup power of the DC/DC conversion circuit.

Optionally, the charging circuit is further configured to stop charging the battery module when the voltage of the battery module reaches a second threshold.

Optionally, a charging voltage output by the charging circuit to the battery module is less than or equal to a rated voltage of the battery module.

Optionally, the charging circuit includes at least one of a voltage limiting circuit, a current limiting circuit, and an anti-reverse circuit. The voltage limiting circuit is also referred to as a voltage regulator circuit, and is configured to limit the charging voltage output to the battery module. The current limiting circuit is configured to limit a charging current output to the battery module. The anti-reverse circuit is configured to control unidirectional transmission of electric energy from the input end of the charging circuit to the output end of the charging circuit.

Optionally, the charging circuit includes the voltage limiting circuit, the current limiting circuit, and the anti-reverse circuit that are sequentially connected between the input end and the output end of the charging circuit. In this way, the charging circuit can implement voltage-limited charging, current-limited charging, and power-limited charging on the battery module, and can prevent the battery module from discharging. The voltage limiting circuit includes a capacitor, a first transistor, a voltage regulator chip, a first resistor, a second resistor, and a third resistor. The capacitor is connected between a positive electrode and a negative electrode of the input end of the charging circuit. A collector of the first transistor is connected to the positive electrode of the input end of the charging circuit. A base of the first transistor is connected to a cathode of the voltage regulator chip. An anode of the voltage regulator chip is connected to the negative electrode of the input end of the charging circuit. The first resistor is connected between the positive electrode of the input end of the charging circuit and the base of the first transistor. The second resistor and the third resistor are connected in series between an emitter of the first transistor and the negative electrode of the input end of the charging circuit, and a series node between the second resistor and the third resistor is connected to a reference electrode of the voltage regulator chip. The current limiting circuit includes a fourth resistor, a second transistor, a fifth resistor, a first diode, and a second diode. The fourth resistor is connected between the emitter of the first transistor and an emitter of the second transistor. A base of the second transistor is connected to the negative electrode of the input end of the charging circuit through the fifth resistor. The first diode and the second diode are connected in series between the emitter of the first transistor and the base of the second transistor. The anti-reverse circuit includes a third diode. An anode of the third diode is connected to a collector of the second transistor, and a cathode of the third diode is configured to connect to the battery module.

Optionally, the charging circuit further includes a switch circuit, where the switch circuit is configured to disconnect a path between the input end and the output end of the charging circuit when the voltage limiting circuit, the current limiting circuit, or the anti-reverse circuit is faulty, that is, disconnect a charging loop of the charging circuit.

According to a third aspect, a photovoltaic energy storage system is provided. The photovoltaic energy storage system includes a photovoltaic inverter, a plurality of battery packs, and an auxiliary power supply. The photovoltaic inverter includes a DC/DC conversion circuit and a DC/AC conversion circuit. An input end of the DC/DC conversion circuit in the photovoltaic inverter is configured to connect to a photovoltaic panel, also referred to as a photovoltaic (PV) module, and an output end is connected to a direct current end of the DC/AC conversion circuit through a direct current bus. An alternating current end of the DC/AC conversion circuit is configured to connect to a power grid or a load. Each of the plurality of battery packs includes a battery module, a DC/DC conversion circuit, and a charging circuit. One end of the DC/DC conversion circuit in the battery pack is configured to connect to the direct current bus, and the other end is connected to the battery module. An input end of the auxiliary power supply is configured to connect to a power supply, an output end of the auxiliary power supply is connected to an input end of the charging circuit, and an output end of the charging circuit is connected to the battery module. The power supply is the photovoltaic panel, the direct current bus, or the power grid. The auxiliary power supply is configured to obtain electric energy from the power supply and supply power to the charging circuit. When the DC/DC conversion circuit stops operating and a voltage of the battery module is lower than a first threshold, the charging circuit is configured to charge the battery module. A charging current output by the charging circuit to the battery module is greater than a leakage current of the battery module, and the charging current output by the charging circuit to the battery module is less than a charging current output by the DC/DC conversion circuit to the battery module when the DC/DC conversion circuit operates. In this way, the battery module can be charged in a timely and effective manner, to avoid overdischarge of the battery module due to long-term lack of charging, and avoid subsequent performance deterioration.

It may be understood that the plurality of battery packs and the auxiliary power supply in the photovoltaic energy storage system may be disposed in the energy storage cabinet provided in the first aspect. Alternatively, each of the plurality of battery packs in the photovoltaic energy storage system may be the battery pack provided in the second aspect, and the auxiliary power supply in the photovoltaic energy storage system is an auxiliary power supply in the battery pack.

Optionally, the DC/DC conversion circuit in the photovoltaic inverter may be an MPPT circuit. The input end of the auxiliary power supply may be connected to a PV-side port of the photovoltaic inverter, to be powered by the photovoltaic panel. Alternatively, the input end of the auxiliary power supply may be connected to the alternating current end (that is, a grid-side port) of the DC/AC conversion circuit, to be powered by the power grid. Alternatively, the input end of the auxiliary power supply may be connected to the direct current bus, to be powered by the direct current bus.

According to a fourth aspect, an energy storage system is provided. The energy storage system includes an energy storage converter and a plurality of battery packs. Each of the plurality of battery packs includes a battery module. The energy storage converter includes a DC/DC conversion circuit, a DC/AC conversion circuit, an auxiliary power supply, and a charging circuit. One end of the DC/DC conversion circuit is connected to the battery module, and the other end of the DC/DC conversion circuit is connected to a direct current end of the DC/AC conversion circuit. An alternating current end of the DC/AC conversion circuit is configured to connect to a power grid or a load. An input end of the auxiliary power supply is configured to connect to the power grid, an output end of the auxiliary power supply is connected to an input end of the charging circuit, and an output end of the charging circuit is connected to the battery module. The auxiliary power supply is configured to obtain electric energy from the power grid and supply power to the charging circuit. When the DC/DC conversion circuit stops operating and a voltage of the battery module is lower than a first threshold, the charging circuit is configured to charge the battery module. A charging current output by the charging circuit to the battery module is greater than a leakage current of the battery module, and the charging current output by the charging circuit to the battery module is less than a charging current output by the DC/DC conversion circuit to the battery module when the DC/DC conversion circuit operates.

For example, the input end of the auxiliary power supply may be connected to the alternating current end of the DC/AC conversion circuit, to be powered by the power grid. In the energy storage system provided in this application, even if the DC/AC conversion circuit in the energy storage converter is faulty, causing no output power at the direct current end of the DC/AC conversion circuit, which further causes the DC/DC conversion circuit to stop operating, the auxiliary power supply can still be powered by the power grid and charge the battery module through the charging circuit. In this way, the battery module can be charged in a timely and effective manner, to avoid overdischarge of the battery module due to long-term lack of charging, and avoid subsequent performance deterioration.

Optionally, both the photovoltaic energy storage system provided in the third aspect and the energy storage system provided in the fourth aspect may be residential energy storage systems, and may be low-voltage energy storage systems. For example, a rated voltage of a battery pack in the photovoltaic energy storage system and a rated voltage of a battery pack in the energy storage system are less than or equal to 48 V.

It may be understood that, in the solutions provided in this application, the auxiliary power supply charges the battery module through the charging circuit. However, the auxiliary power supply usually supplies power to a control circuit, a drive circuit, and the like, and an output voltage of the auxiliary power supply is usually low (usually 24 V or 48 V). Therefore, if a rated voltage of a battery pack in the energy storage system is high, the charging circuit cannot effectively charge a battery module in the battery pack based on electric energy provided by the auxiliary power supply. However, for a low-voltage energy storage system, it can be ensured that the charging circuit can effectively charge a battery module in a battery pack based on a voltage output by the auxiliary power supply.

According to a fifth aspect, an energy storage converter is provided. The energy storage converter includes a DC/DC conversion circuit, a DC/AC conversion circuit, an auxiliary power supply, and a charging circuit. One end of the DC/DC conversion circuit is connected to a battery pack, and the other end is connected to a direct current end of the DC/AC conversion circuit. An alternating current end of the DC/AC conversion circuit is configured to connect to a power grid or a load. An input end of the auxiliary power supply is configured to connect to the power grid, an output end of the auxiliary power supply is connected to an input end of the charging circuit, and an output end of the charging circuit is connected to the battery pack. The auxiliary power supply is configured to obtain electric energy from the power grid and supply power to the charging circuit. When the DC/DC conversion circuit stops operating and a voltage of the battery pack is lower than a first threshold, the charging circuit is configured to charge the battery pack. A charging current output by the charging circuit to the battery module is greater than a leakage current of the battery module, and the charging current output by the charging circuit to the battery module is less than a charging current output by the DC/DC conversion circuit to the battery module when the DC/DC conversion circuit operates.

In conclusion, this application provides the energy storage cabinet, the battery pack, the photovoltaic energy storage system, and the energy storage system. In the solutions provided in this application, the auxiliary power supply can obtain electric energy from the power supply and supply power to the charging circuit in the battery pack, and the charging circuit can charge the battery module when the DC/DC conversion circuit stops operating and the voltage of the battery module is low. In addition, the charging current output by the charging circuit is greater than the leakage current of the battery module, and is less than the charging current output by the DC/DC conversion circuit when the DC/DC conversion circuit operates. Based on this, even if the DC/DC conversion circuit cannot operate normally due to a fault of the photovoltaic inverter, or in a scenario with insufficient illumination, the DC/DC conversion circuit cannot operate normally due to an excessively low voltage or power of the direct current bus, the charging circuit can still charge the battery module in time based on the electric energy provided by the auxiliary power supply, to avoid overdischarge of the battery module due to long-term lack of charging.

### BRIEF DESCRIPTION OF DRAWINGS

FIG. 1 is a diagram of a structure of a photovoltaic energy storage system according to an embodiment of this application;
FIG. 2 is a diagram of a structure of another photovoltaic energy storage system according to an embodiment of this application;
FIG. 3 is a diagram of a structure of still another photovoltaic energy storage system according to an embodiment of this application;
FIG. 4 is a diagram of a structure of yet another photovoltaic energy storage system according to an embodiment of this application;
FIG. 5 is a diagram of a structure of a charging circuit according to an embodiment of this application;
FIG. 6 is a diagram of a structure of another charging circuit according to an embodiment of this application; and
FIG. 7 is a diagram of a structure of an energy storage system according to an embodiment of this application.

### DESCRIPTION OF EMBODIMENTS

The following describes in detail an energy storage cabinet, a battery pack, a photovoltaic energy storage system, and an energy storage system provided in embodiments of this application with reference to the accompanying drawings.

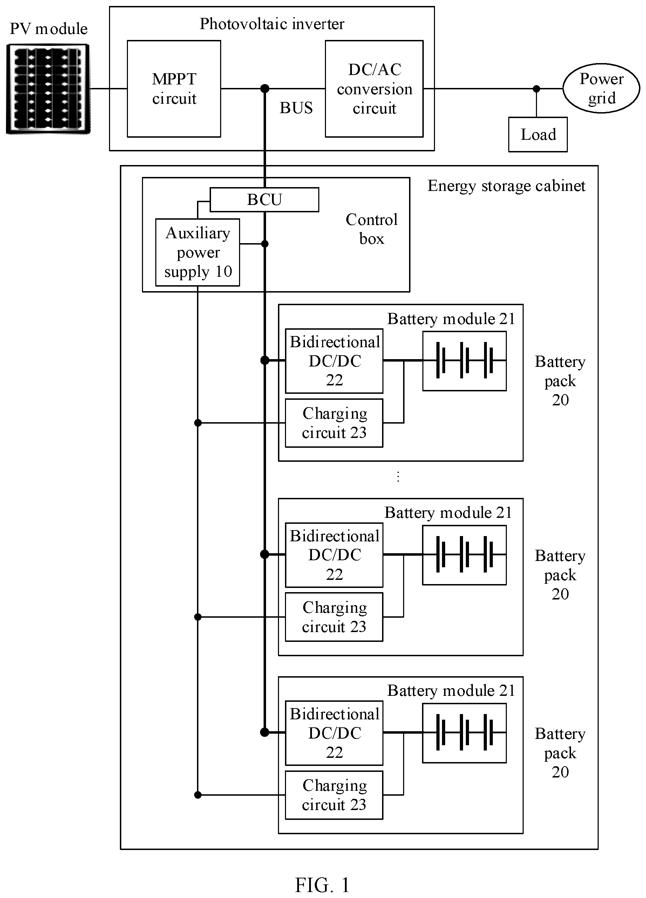

FIG. 1 is a diagram of a structure of a photovoltaic energy storage system according to an embodiment of this application. As shown in FIG. 1, the photovoltaic energy storage system may include a photovoltaic inverter and a plurality of battery packs. The photovoltaic inverter includes a DC/DC conversion circuit (for example, an MPPT circuit) and a DC/AC conversion circuit. Each of the plurality of battery packs includes a bidirectional DC/DC conversion circuit and a battery module, and the battery module includes a plurality of cells connected in series. One end of the MPPT circuit in the photovoltaic inverter is configured to connect to a photovoltaic panel, and the other end is configured to connect to a direct current end of the DC/AC conversion circuit through a direct current bus (BUS). An alternating current end of the DC/AC conversion circuit is configured to connect to a power grid and a load. The photovoltaic panel is also referred to as a PV module, and the end that is of the MPPT circuit and that is configured to connect to the photovoltaic panel is also referred to as a PV-side port. The MPPT circuit is configured to adjust an operating point of the photovoltaic panel, so that the photovoltaic panel runs in a maximum power output state to maximize energy extraction efficiency. The DC/AC conversion circuit is also referred to as an inverter circuit, and is configured to implement bidirectional conversion between a direct current and an alternating current.

Ends (also referred to as bus-side ports) of bidirectional DC/DC conversion circuits in the plurality of battery packs are connected in parallel to the direct current bus, and the other ends (also referred to as battery-side ports) of the bidirectional DC/DC conversion circuits are connected to the battery modules. The bidirectional DC/DC conversion circuit is configured to: in a charging mode, perform voltage conversion (for example, buck) on a voltage on the direct current bus, and then charge the plurality of cells in the battery module; and in a discharging mode, perform voltage conversion (for example, boost) on a voltage of the battery module, and then output the voltage to the direct current bus, to discharge the plurality of cells in the battery module. In other words, the bidirectional DC/DC conversion circuit can implement bidirectional flow of a direct current and voltage conversion. In addition, the bidirectional DC/DC conversion circuit needs to charge or discharge the battery module under scheduling of the photovoltaic inverter.

In a photovoltaic energy storage scenario shown in FIG. 1, when the photovoltaic inverter is faulty, the photovoltaic inverter cannot schedule the bidirectional DC/DC conversion circuit in the battery pack. As a result, the bidirectional DC/DC conversion circuit cannot run normally, that is, cannot normally charge the battery module in the battery pack. Alternatively, when the photovoltaic inverter cannot maintain a normal grid-connected or off-grid operation due to insufficient illumination, a voltage and power of the direct current bus are too low to maintain normal running of the bidirectional DC/DC conversion circuit in the battery pack, that is, the DC/DC conversion circuit cannot normally charge the battery module in the battery pack. After the operating condition in which the bidirectional DC/DC conversion circuit cannot charge the battery module is maintained for a specific period of time, the battery module in the battery pack may be overdischarged (over-discharge), and consequently, performance of the battery module deteriorates. Performance deterioration of the battery module caused by overdischarge may also be referred to as over-discharge of the battery module.

For example, a fault of the photovoltaic inverter may include a power grid-side fault, a PV-side fault, an off-grid overload fault, a photovoltaic inverter damage fault, and the like. For example, the power grid-side fault may include that the photovoltaic inverter cannot be connected to the power grid due to abnormal power grid frequency. The PV-side fault may include PV overvoltage, overcurrent, or arcing. When the photovoltaic inverter detects an arc on a PV side, an arc fault circuit interrupter (aAFCI) of the photovoltaic inverter performs a protection action.

To avoid overdischarge of the battery module in the battery pack, in some embodiments, when a voltage of the battery pack is within a normal range, a charging/discharging control circuit (that is, the bidirectional DC/DC conversion circuit) in the battery pack enters a normal operating mode. If the voltage of the battery pack is lower than a normal operating voltage, the charging/discharging control circuit starts to forcibly charge a battery. However, a premise for implementing charging in this solution is that the bidirectional DC/DC conversion circuit can operate normally. As described above, when photovoltaic energy is insufficient or the photovoltaic inverter is faulty, the bidirectional DC/DC conversion circuit cannot operate normally. In this case, the bidirectional DC/DC conversion circuit cannot charge the battery pack.

In some other embodiments, when undervoltage protection occurs in the battery pack, a magnetic latching relay can disconnect the battery pack from the DC/DC conversion circuit, that is, disconnect a load of the battery pack, to reduce electric energy consumption of the battery pack. However, because the battery pack still self-discharges when no load is connected to the battery pack, if the battery pack is not charged for a long time, overdischarge also occurs.

Embodiments of this application provide an energy storage cabinet (which may also be referred to as an energy storage system). The energy storage cabinet can ensure that when a bidirectional DC/DC cannot operate normally because a photovoltaic inverter is faulty, or when a voltage and power of a direct current bus are low due to insufficient illumination, which prevents the bidirectional DC/DC from operating normally, the energy storage cabinet can still charge a battery module in a battery pack, to avoid overdischarge of the battery module. The energy storage cabinet may be used in the photovoltaic energy storage system shown in FIG. 1.

As shown in FIG. 1, the energy storage cabinet provided in embodiments of this application includes an auxiliary power supply (auxiliary power for short) 10 and a plurality of battery packs 20. Each of the plurality of battery packs 20 includes a battery module 21, a DC/DC conversion circuit 22, and a charging circuit 23. One end (also referred to as a high-voltage-side or bus-side port) of the DC/DC conversion circuit 22 is configured to connect to a direct current bus, and the other end (also referred to as a low-voltage-side or battery-side port) is configured to connect to the battery module 21. Refer to FIG. 1. For example, ends of DC/DC conversion circuits 22 in the plurality of battery packs 20 are connected in parallel to the direct current bus. An input end of the auxiliary power supply 10 is configured to connect to a power supply (FIG. 1 is described by using an example in which the power supply is the direct current bus), an output end of the auxiliary power supply 10 is connected to an input end of the charging circuit 23, and an output end of the charging circuit 23 is connected to the battery module 21. Refer to FIG. 1. For example, input ends of charging circuits 23 in the plurality of battery packs 20 are connected in parallel to the output end of the auxiliary power supply 10.

The auxiliary power supply 10 is configured to obtain electric energy from the power supply and supply power to the charging circuit 23. When the DC/DC conversion circuit 22 stops operating and a voltage of the battery module 21 is lower than a first threshold, the charging circuit 23 is configured to charge the battery module 21. A charging current output by the charging circuit 23 to the battery module 21 is greater than a leakage current of the battery module 21, and the charging current output by the charging circuit 23 to the battery module 21 is less than a charging current output by the DC/DC conversion circuit 22 to the battery module 21 when the DC/DC conversion circuit 22 operates. It may be understood that, when the DC/DC conversion circuit 22 operates normally, the DC/DC conversion circuit 22 is configured to obtain electric energy from the direct current bus and charge the battery module 21, or is configured to transmit electric energy of the battery module 21 to the direct current bus, to discharge the battery module 21. In other words, the DC/DC conversion circuit 22 is a bidirectional DC/DC conversion circuit that can implement bidirectional energy transmission. The DC/DC conversion circuit 22 can operate in a charging mode and charge the battery module 21, and can also operate in a discharging mode and discharge the battery module 21. In addition, in the charging mode, the DC/DC conversion circuit 22 can implement voltage-limited charging, current-limited charging, and/or power-limited charging; and in the discharging mode, the DC/DC conversion circuit 22 can implement power-limited discharging and/or current-limited discharging.

It may be further understood that the leakage current is also referred to as a self-discharge current, and is a small continuous discharge current caused by a physical or chemical characteristic inside the battery module 21 when the battery module 21 is not connected to an external load (or is in an open-circuit state). A magnitude of the leakage current is usually at a microampere (uA) level. For example, the charging current output by the charging circuit 23 to the battery module 21 may be greater than or equal to 0.05 A. In embodiments of this application, the charging current of the charging circuit 23 is greater than the leakage current of the battery module 21, so that the leakage current of the battery module 21 can be effectively compensated, and overdischarge caused by self-discharge of the battery module 21 can be avoided. In addition, the charging current output by the charging circuit 23 to the battery module 21 is designed to be less than the charging current output by the DC/DC conversion circuit 22 to the battery module 21 when the DC/DC conversion circuit 22 operates. That is, the charging current output by the charging circuit 23 is designed to be small, so that it can be ensured that the charging circuit 23 can still effectively charge the battery module 21 by using a small charging current when output power of the auxiliary power supply 10 is low.

In embodiments of this application, when the DC/DC conversion circuit 22 stops operating, for example, in a scenario with insufficient illumination, when the DC/DC conversion circuit 22 stops operating due to an excessively low voltage or power of the direct current bus, or when the DC/DC conversion circuit 22 stops operating because the photovoltaic inverter is faulty, the charging circuit 23 can charge the battery module 21 in time based on electric energy provided by the auxiliary power supply 10 when the voltage of the battery module 21 is lower than the first threshold. In addition, the charging current output by the charging circuit 23 is small, and is greater than the leakage current of the battery module 21. Therefore, it can be effectively avoided that the battery module 21 is overdischarged due to self-discharge in a scenario in which the battery module 21 has not been charged for a long time.

In conclusion, embodiments of this application provide the energy storage cabinet. The charging circuit is disposed in each battery pack in the energy storage cabinet, the input end of the charging circuit is connected to the auxiliary power supply, and the output end is connected to the battery module. The auxiliary power supply can supply power to the charging circuit, and the charging circuit can charge the battery module. In addition, the charging current output by the charging circuit is small, and is greater than the leakage current of the battery module. Based on this, even if the DC/DC conversion circuit in the battery pack cannot operate normally due to a fault of the photovoltaic inverter, or cannot operate normally due to an excessively low voltage or power of the direct current bus, the charging circuit can still charge the battery module based on the electric energy provided by the auxiliary power supply, to avoid overdischarge of the battery module due to long-term lack of charging.

Optionally, as shown in FIG. 1, the direct current bus connected to the DC/DC conversion circuit 22 is further connected to the direct current end of the DC/AC conversion circuit in the photovoltaic inverter, and the alternating current end of the DC/AC conversion circuit is configured to connect to the power grid and the load. The photovoltaic inverter further includes the MPPT circuit. One end (that is, a PV-side port) of the MPPT circuit is connected to the photovoltaic panel (that is, a PV module), and the other end is connected to the direct current bus.

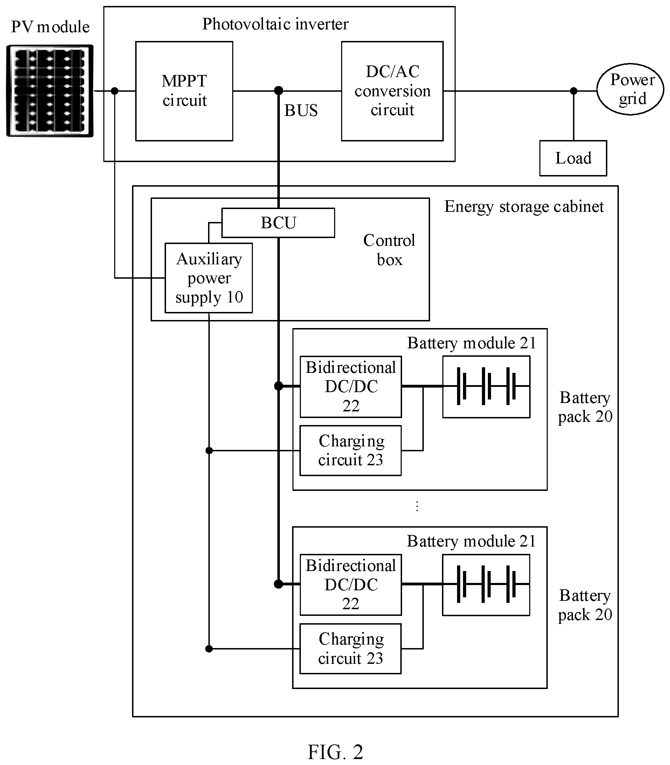

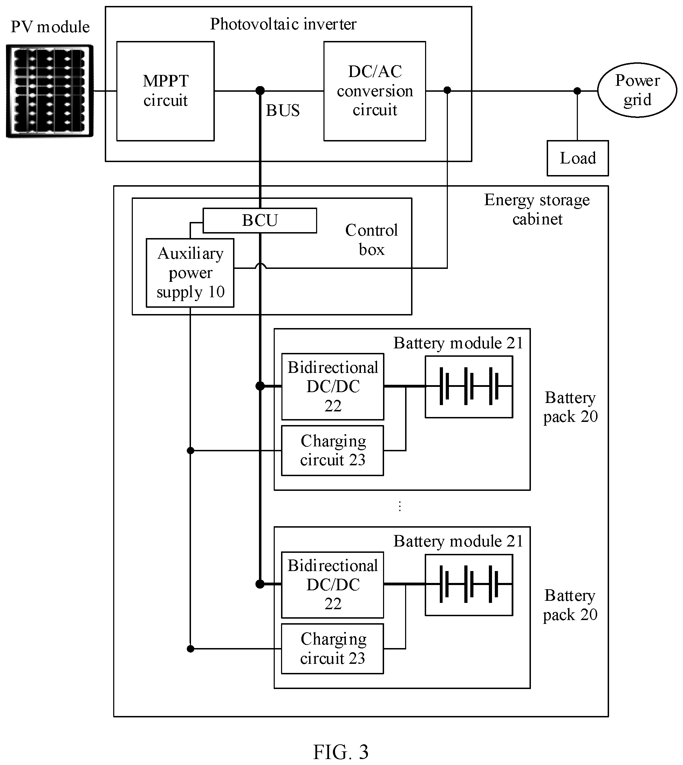

As shown in FIG. 1, the power supply connected to the input end of the auxiliary power supply 10 may be the direct current bus, that is, the auxiliary power supply 10 can obtain electric energy from the direct current bus, which is also referred to as power obtaining. Alternatively, as shown in FIG. 2, the power supply connected to the input end of the auxiliary power supply 10 may be the PV module, that is, the input end of the auxiliary power supply 10 may be connected to the PV-side port of the photovoltaic inverter, and the auxiliary power supply 10 can be powered by the PV module. Alternatively, as shown in FIG. 3, the power supply connected to the input end of the auxiliary power supply 10 may be the power grid, that is, the input end of the auxiliary power supply 10 may be connected to the alternating current end (also referred to as a power grid-side port) of the DC/AC conversion circuit, and the auxiliary power supply 10 can be powered by the power grid.

When the power supply is the direct current bus, because electric energy on the direct current bus is from the PV module or the power grid, obtaining power by the auxiliary power supply 10 from the direct current bus is equivalent to obtaining power from the PV module or the power grid. In other words, the auxiliary power supply 10 and the charging circuit 23 can not only charge the battery module 21 by using electric energy of the PV module, but also charge the battery module 21 by using electric energy of the power grid. Therefore, flexibility of obtaining power by the auxiliary power supply is effectively improved, and flexibility of charging the battery module 21 by the charging circuit is further improved.

Optionally, the DC/DC conversion circuit 22 stops operating when a voltage of the direct current bus is lower than a minimum startup voltage of the DC/DC conversion circuit 22, or the DC/DC conversion circuit 22 stops operating when power of the direct current bus is lower than minimum startup power of the DC/DC conversion circuit 22. In addition, a minimum startup voltage of the auxiliary power supply 10 is lower than the minimum startup voltage of the DC/DC conversion circuit 22, and minimum startup power of the auxiliary power supply 10 is lower than the minimum startup power of the DC/DC conversion circuit 22. Alternatively, it may be understood that an input voltage range of the auxiliary power supply 10 is usually wide (for example, greater than an output voltage range of the MPPT circuit during normal operation), and the auxiliary power supply 10 requires low input power for normal running, for example, less than or equal to 10 watts (W).

Based on this, in the photovoltaic energy storage scenario shown in FIG. 1, when the photovoltaic inverter cannot operate normally due to insufficient photovoltaic energy, causing the voltage of the direct current bus to be lower than the minimum startup voltage of the DC/DC conversion circuit 22, or when the power of the direct current bus is lower than the minimum startup power of the DC/DC conversion circuit 22, the DC/DC conversion circuit 22 stops charging the battery module 21. However, because the auxiliary power supply 10 has the wide input voltage range and low power, when the power supply connected to the input end of the auxiliary power supply 10 is the direct current bus, even if a voltage or power of the direct current bus is low and cannot maintain normal operation of the DC/DC conversion circuit 22, the auxiliary power supply 10 can still be powered by the direct current bus and operate normally. Correspondingly, the auxiliary power supply 10 can supply power to the charging circuit 23, so that the charging circuit 23 can charge the battery module 21 based on the electric energy provided by the auxiliary power supply 10. In addition, when the power supply connected to the auxiliary power supply 10 is the photovoltaic panel or the power grid, because the auxiliary power supply 10 can directly be powered by the photovoltaic panel or the power grid, an operating status of the auxiliary power supply 10 is not affected by an operating status of the DC/DC conversion circuit 22. That is, when the DC/DC conversion circuit 22 stops operating, the auxiliary power supply 10 can supply power to the charging circuit 23 provided that the auxiliary power supply 10 can be powered by the photovoltaic panel or the power grid, so that the charging circuit 23 charges the battery module 21.

It may be understood that running of the auxiliary power supply 10 does not depend on scheduling of the photovoltaic inverter. Therefore, in the photovoltaic energy storage scenario shown in FIG. 1, when the DC/DC conversion circuit 22 stops operating because the photovoltaic inverter is faulty, provided that the auxiliary power supply 10 can be powered by the power supply (for example, the direct current bus, the PV module, or the power grid) and operate normally, it can be ensured that the charging circuit 23 can charge the battery module 21 in time based on the electric energy provided by the auxiliary power supply 10, to avoid overdischarge of the battery module 21.

It may be further understood that the energy storage cabinet usually further includes a sampling circuit, a control circuit, a drive circuit, a protection circuit, and the like, and the auxiliary power supply 10 is further configured to supply power to the sampling circuit, the control circuit, the drive circuit, the protection circuit, and the like. In other words, in the solutions provided in embodiments of this application, the existing auxiliary power supply 10 in the energy storage cabinet can be reused to supply power to the charging circuit 23, to avoid increasing structural complexity and hardware costs of the energy storage cabinet.

As described above, the DC/DC conversion circuit 22 in the energy storage cabinet is a bidirectional DC/DC conversion circuit. To implement bidirectional startup of the DC/DC conversion circuit 22, two auxiliary power supplies are usually disposed in the energy storage cabinet. An input end of one auxiliary power supply is connected to a high-voltage-side port of the DC/DC conversion circuit 22, that is, connected to the direct current bus, and is configured to be powered by the direct current bus. The auxiliary power supply is also referred to as a high-voltage auxiliary power supply. An input end of the other auxiliary power supply is connected to a low-voltage-side port of the DC/DC conversion circuit 22, that is, connected to the battery module 21, and is configured to be powered by the battery module 21. The auxiliary power supply is also referred to as a low-voltage auxiliary power supply. The auxiliary power supply 10 in embodiments of this application may be the high-voltage auxiliary power supply. In other words, in the solutions provided in embodiments of this application, the high-voltage auxiliary power supply in the energy storage cabinet can be directly reused to supply power to the charging circuit 23, to charge the battery module 21. In this way, it can be ensured that when the high-voltage auxiliary power supply operates normally, it can be ensured that there is a charging current for charging the battery module 21, to avoid overdischarge of the battery module 21. In addition, because the existing high-voltage auxiliary power supply in the energy storage cabinet is reused, increasing structural complexity and hardware costs of the energy storage cabinet can be effectively avoided. It may be understood that, in addition to the direct current bus, an input end of the high-voltage auxiliary power supply may be further connected to another port. Refer to FIG. 2. For example, the input end of the high-voltage auxiliary power supply may be further connected to the PV-side port of the photovoltaic inverter. Refer to FIG. 3 Alternatively, the input end of the high-voltage auxiliary power supply may be connected to the power grid-side port of the photovoltaic inverter.

It may be further understood that the auxiliary power supply 10 in embodiments of this application may reuse the high-voltage auxiliary power supply in the energy storage cabinet, or may be disposed independently of the high-voltage auxiliary power supply. That is, the auxiliary power supply 10 may not reuse an existing auxiliary power supply, and may be a power supply circuit that is disposed in the energy storage cabinet and that is dedicated to supplying power to the charging circuit 23 to further charge the battery module 21. In addition, when the auxiliary power supply 10 does not reuse an existing auxiliary power supply, a structure of the auxiliary power supply 10 may be the same as or similar to a structure of the existing auxiliary power supply in the energy storage cabinet. For example, if the power supply connected to the auxiliary power supply 10 is the direct current bus or the photovoltaic panel, the auxiliary power supply 10 may include a voltage conversion circuit. If the power supply connected to the auxiliary power supply 10 is the power grid, the auxiliary power supply 10 may include a rectifier circuit and a voltage conversion circuit. The charging circuit 23 may include at least one of a voltage limiting circuit, a current limiting circuit, and an anti-reverse circuit.

In an optional implementation, as shown in FIG. 1 to FIG. 3, the energy storage cabinet further includes a control box, and the control box includes a housing and a battery control unit (BCU). The BCU is configured to monitor an operating status of the battery pack, including monitoring health data such as a temperature, a voltage, and a current of the battery pack. Both the auxiliary power supply 10 and the BCU are located in the housing. In addition, the BCU is electrically connected to the battery pack 20, and the BCU is electrically connected to the auxiliary power supply 10. Refer to FIG. 1 to FIG. 3. For example, one end of the DC/DC conversion circuit 22 in each battery pack 20 is configured to connect to the direct current bus through the BCU. The auxiliary power supply 10 is configured to supply power to the BCU, that is, the auxiliary power supply 10 is an auxiliary power supply of the BCU. The charging circuit 23 in the battery pack 20 can reuse the auxiliary power supply 10 of the BCU to charge the battery module 21. For example, the BCU includes a switch unit, and the switch unit may include a switch and a protection circuit. In addition, the switch unit is connected in series to the direct current bus, or it may be understood that one end of the DC/DC conversion circuit 22 in the battery pack 20 is connected to the direct current bus through the switch unit. The switch unit is configured to control connection and disconnection between the direct current bus and the DC/DC conversion circuit 22. It may be understood that the BCU further includes a sampling circuit, a control circuit, a drive circuit, a protection circuit, and the like. The auxiliary power supply 10 is configured to supply power to the sampling circuit, the control circuit, the drive circuit, the protection circuit, and the like in the BCU.

In this implementation, because charging circuits 23 in the plurality of battery packs 20 can share the auxiliary power supply 10 of the BCU to charge battery modules 21, a structure of the energy storage cabinet can be effectively simplified, and hardware costs of the energy storage cabinet can be reduced.

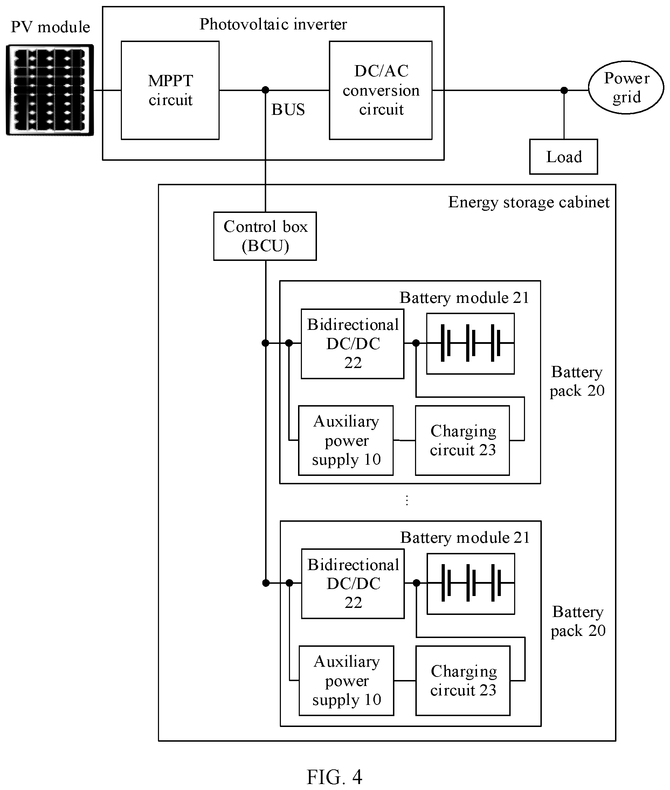

In another optional implementation, as shown in FIG. 4, the auxiliary power supply 10 is located in the battery pack 20. That is, each of the plurality of battery packs 20 included in the energy storage cabinet includes the auxiliary power supply 10, and the auxiliary power supply 10 is an auxiliary power supply configured to supply power to a sampling circuit, a control circuit, a drive circuit, a protection circuit, and the like in the battery pack 20.

In this implementation, the charging circuit 23 in each battery pack 20 can reuse electric energy provided by the auxiliary power supply 10 in the battery pack 20 to charge the battery module 21. This can effectively avoid increasing structural complexity and hardware costs of the battery pack.

Optionally, a charging current output by the charging circuit 23 to the battery module 21 is less than or equal to 0.2 A, for example, may be less than or equal to 0.1 A. As described above, the leakage current of the battery module 21 is small, and is usually at a uA level. Therefore, the charging current output by the charging circuit 23 to the battery module 21 may also be designed to be small. In this way, charging power of the charging circuit 23 can be effectively reduced on the premise that the leakage current is effectively compensated, to ensure that the charging circuit 23 can still charge the battery module 21 by using a small charging current when output power of the auxiliary power supply 10 is low.

It may be understood that a magnitude of a charging current used by the DC/DC conversion circuit 22 in the energy storage cabinet to charge the battery module 21 is usually at a 10 A level, for example, may be 120 A or 140 A. In embodiments of this application, because the charging current used by the charging circuit 23 to charge the battery module 21 is far less than the charging current output by the DC/DC conversion circuit 22 to the battery module 21 when the DC/DC conversion circuit 22 operates, the charging power of the charging circuit 23 is also far less than charging power of the DC/DC conversion circuit 22. In addition, because the charging power output by the DC/DC conversion circuit 22 to the battery module 21 needs to be uniformly scheduled by an upper-level controller (for example, the photovoltaic inverter), designing the charging current of the charging circuit 23 to be small can ensure that power output by the charging circuit 23 has a small impact (that is, the impact may be ignored) on power output by the DC/DC conversion circuit 22, thereby avoiding affecting control and scheduling logic of the upper-level controller on the DC/DC conversion circuit 22.

Optionally, the first threshold (also referred to as a charging startup threshold) is greater than the discharge cut-off voltage of the battery module 21. The discharge cut-off voltage is also referred to as an end voltage, and is a minimum voltage value that is allowed to be reached by the battery module 21 in a discharging process. If the battery module 21 continues to discharge after the voltage reaches the discharge cut-off voltage, irreversible damage is caused due to deep discharge. Therefore, setting the first threshold to be greater than the discharge cut-off voltage of the battery module 21 can ensure that the charging circuit 23 charges the battery module 21 in time before the voltage of the battery module 21 drops to the discharge cut-off voltage, thereby avoiding irreversible damage to the battery module 21 caused by deep discharge.

It may be understood that the discharge cut-off voltage is lower than a rated voltage of the battery module 21, and the discharge cut-off voltage may be flexibly set based on a type of a cell in the battery module 21 and a requirement of an application scenario. For example, it is assumed that the cell in the battery module 21 is a lithium iron phosphate cell, and a rated voltage of a single cell is 3.2 V. In this case, a discharge cut-off voltage of the single cell may range from 2 V to 2.5 V. If a quantity of the plurality of cells connected in series in the battery module 21 is n, the discharge cut-off voltage of the battery module 21 is equal to n multiplied by the discharge cut-off voltage of the single cell.

It may be further understood that the first threshold may be determined based on the quantity n of the plurality of cells connected in series in the battery module 21 and a charging startup threshold of the single cell. The charging startup threshold of the single cell is greater than the discharge cut-off voltage of the single cell, and may be flexibly set based on the type of the cell and the requirement of the application scenario. For example, the charging startup threshold of the single cell may be 70% to 90% of the rated voltage, and correspondingly, the first threshold may be 70% to 90% of the rated voltage of the battery module 21.

For example, it is assumed that the cell in the battery module 21 is a lithium iron phosphate cell, and a rated voltage of a single cell is 3.2 V. In this case, the charging startup threshold of the single cell may be greater than or equal to 2.7 V. Correspondingly, the first threshold may be greater than or equal to n×2.7 V. For example, the charging startup threshold of the single cell may be 2.9 V. If the battery module 21 includes n=8 cells connected in series, the first threshold may be equal to 8×2.9 V=23.2 V.

It may be further understood that, when the DC/DC conversion circuit 22 in the energy storage cabinet runs normally, the DC/DC conversion circuit 22 can also charge the cell battery module 21 when the voltage of the cell battery module 21 is lower than a preset threshold. That is, when the voltage of the cell battery module 21 is low, the DC/DC conversion circuit 22 and the charging circuit 23 can jointly charge the cell battery module 21. The preset threshold may be greater than or equal to the first threshold. For example, the preset threshold is greater than the first threshold, that is, when the DC/DC conversion circuit 22 runs normally, the DC/DC conversion circuit 22 may preferentially charge the cell battery module 21.

Optionally, the charging circuit 23 is further configured to stop charging the battery module 21 when the voltage of the battery module 21 is greater than or equal to a second threshold. The second threshold is greater than or equal to the first threshold, and is less than the rated voltage of the battery module 21. For example, the second threshold may be equal to the first threshold. That is, before the voltage of the battery module 21 reaches the rated voltage, the charging circuit 23 may stop charging the battery module 21.

Because the charging current of the charging circuit 23 is small, when the voltage of the battery module 21 is greater than or equal to the second threshold, and the charging circuit 23 continues to charge the battery module 21, effect of improving performance of the battery module 21 is not significant. Correspondingly, in embodiments of this application, the charging circuit 23 can stop charging the battery module 21 when the voltage of the battery module 21 reaches the second threshold. In other words, the charging circuit 23 can stop charging provided that it is ensured that the battery module 21 is not overdischarged, to avoid unnecessary power consumption.

It may be understood that, if the DC/DC conversion circuit 22 can run normally, after the charging circuit 23 stops charging, the DC/DC conversion circuit 22 can still continue to charge the battery module 21 until the battery module 21 is charged to the charging cut-off voltage of the battery module 21. The charging cut-off voltage may be greater than the rated voltage of the battery module 21. For example, it is assumed that a rated voltage of a single battery module 21 is 3.2 V, the charging cut-off voltage may be 3.65 V.

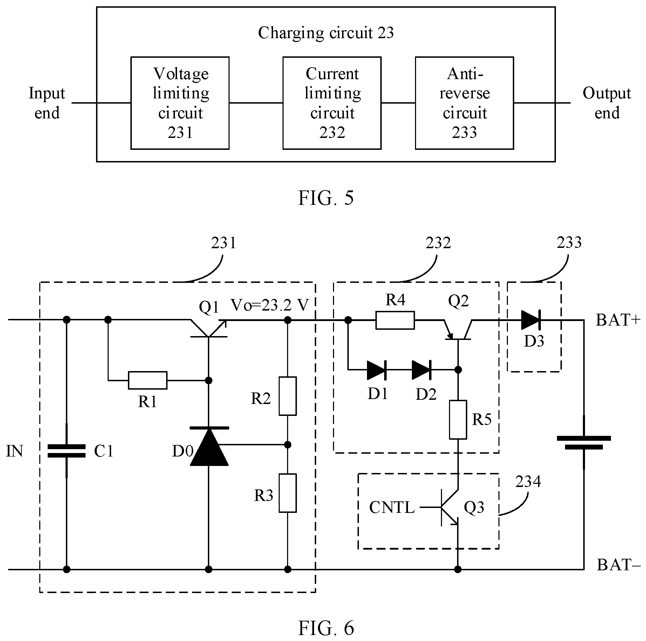

Optionally, as shown in FIG. 5, the charging circuit 23 includes at least one of a voltage limiting circuit 231, a current limiting circuit 232, and an anti-reverse circuit 233. The voltage limiting circuit 231 is also referred to as a voltage regulator circuit, and is configured to limit the charging voltage output to the battery module 21, to implement voltage-limited charging on the battery module 21 and avoid overcharging the battery module 21. For example, the voltage limiting circuit can limit the charging voltage output to the battery module 21 to be less than or equal to the rated voltage of the battery module 21. The current limiting circuit 232 is configured to limit the charging current output to the battery module 21, to implement current-limited charging on the battery module 21. For example, the current limiting circuit 232 can limit the charging current output to the battery module 21 to be greater than the leakage current of the battery module 21 and less than or equal to 0.2 A. If the charging circuit includes the voltage limiting circuit 231 and the current limiting circuit 232, power-limited charging can be implemented on the battery module 21, to ensure that power output by the charging circuit 23 to the battery module 21 is small, thereby avoiding affecting the control logic of the DC/DC conversion circuit 22. The anti-reverse circuit 233 is configured to control unidirectional transmission of electric energy from the input end of the charging circuit 23 to the output end of the charging circuit 23. In other words, the anti-reverse circuit 233 can ensure that the electric energy flows from the auxiliary power supply 10 to the battery module 21, to charge the battery module 21, and can prevent the electric energy from flowing out of the battery module 21, to prevent the battery module 21 from discharging. In this way, overdischarge of the battery module 21 can be effectively avoided.

Optionally, as shown in FIG. 5, the charging circuit 23 includes the voltage limiting circuit 231, the current limiting circuit 232, and the anti-reverse circuit 233 that are sequentially connected. An input end of the voltage limiting circuit 231 is the input end of the charging circuit 23, and may be connected to the direct current bus BUS. An output end of the voltage limiting circuit 231 is connected to an input end of the current limiting circuit 232. An output end of the current limiting circuit 232 is connected to the battery module 21 through the anti-reverse circuit 233, that is, connected to a power port BAT of the battery module 21.

For example, as shown in FIG. 6, the voltage limiting circuit 231 includes a capacitor C1, a first transistor Q1, a voltage regulator chip D0, a first resistor R1, a second resistor R2, and a third resistor R3. The voltage regulator chip D0 may be a TL431 chip. The capacitor C1 is connected between a positive electrode and a negative electrode of the input end IN of the charging circuit 23, and is configured to regulate a voltage output by the auxiliary power supply 10. A collector of the first transistor Q1 is connected to the positive electrode of the input end IN, and a base of the first transistor Q1 is connected to a cathode of the voltage regulator chip D0. An anode of the voltage regulator chip D0 is connected to the negative electrode of the input end IN, that is, the anode is grounded. The first resistor R1 is connected between the positive electrode of the input end IN of the charging circuit 23 and the base of the first transistor Q1. The second resistor R2 and the third resistor R3 are connected in series between an emitter of the first transistor Q1 and the negative electrode of the input end IN, and a series node between the second resistor R2 and the third resistor R3 is connected to a reference electrode of the voltage regulator chip D0.

It may be understood that, an output voltage (that is, a charging voltage) of the voltage limiting circuit 231 may be adjusted by adjusting resistance values of the second resistor R2 and the third resistor R3. For example, the output voltage Vo (that is, a voltage of the emitter of the first transistor Q1) of the voltage limiting circuit 231 may meet: Vo = Vref × (1 + R2/R3). Vref is a reference voltage of the voltage regulator chip D0, and the reference voltage is usually 2.5 V.

It may be further understood that the output voltage Vo of the voltage limiting circuit 231 is the first threshold, and the second threshold is equal to the first threshold. Refer to FIG. 6. For example, it is assumed that the output voltage of the voltage limiting circuit 231 is Vo = 8 × 2.9V = 23.2V. When the voltage of the battery module 21 is lower than the first threshold 23.2 V, the voltage limiting circuit 231 can charge the battery module 21, so that the voltage of the battery module 21 rises. When the voltage of the battery module 21 slowly rises to the second threshold 23.2 V, the voltage limiting circuit 231 can stop charging the battery module 21.

Still refer to FIG. 6. The current limiting circuit 232 may include a fourth resistor R4, a fifth resistor R5, a first diode D1, a second diode D2, and a second transistor Q2. The fourth resistor R4 is connected between the emitter of the first transistor Q1 and an emitter of the second transistor Q2, and a base of the second transistor Q2 is connected to the negative electrode (that is, is grounded) of the input end IN of the charging circuit 23 through the fifth resistor R5.

The first diode D1 and the second diode D2 are connected in series between the emitter of the first transistor Q1 and the base of the second transistor Q2. In addition, anodes of the two diodes are connected to the emitter of the first transistor Q1, and cathodes of the two diodes are connected to the base of the second transistor Q2.

It may be understood that a magnitude of a charging current (that is, a current of the collector of the second transistor Q2) output by the current limiting circuit 232 is determined based on a ratio of a conduction voltage drop of a single diode to the fourth resistor R4. For example, the charging current is approximately equal to a ratio of the conduction voltage drop of the single diode to the fourth resistor R4. Because the conduction voltage drop of the diode is usually fixed, for example, is approximately 0.7 V, the charging current can be flexibly adjusted by adjusting the resistance value of the fourth resistor R4.

Still refer to FIG. 6. The anti-reverse circuit 233 includes a third diode D3, where an anode of the third diode D3 is connected to the collector of the second transistor Q2, and a cathode of the third diode D3 is configured to connect to the battery module 21, for example, connect to a positive electrode of the battery module 21. It can be learned from a unidirectional conduction characteristic of the diode that the third diode D3 can allow the charging current to be unidirectionally transmitted to the battery module 21 and prevent the battery module 21 from reversely outputting a current. In this way, reverse discharge of the battery module 21 can be effectively avoided.

Optionally, as shown in FIG. 6, the charging circuit 23 further includes a switch circuit 234, and the switch circuit 234 is configured to disconnect a path between the input end and the output end of the charging circuit 23 when the voltage limiting circuit 231, the current limiting circuit 232, or the anti-reverse circuit 233 is faulty. When the voltage limiting circuit 231 is faulty (for example, the first transistor Q1 is short-circuited), that is, when the voltage regulator circuit fails, the battery module 21 may be overcharged. Therefore, disconnecting a charging loop of the charging circuit 23 by using the switch circuit 234 can implement overcharge protection for the battery module 21. When the current limiting circuit 232 is faulty, the charging current may be excessively large, and consequently, charging cannot be effectively performed or the control logic of the DC/DC conversion circuit 22 is affected. Therefore, the charging loop of the charging circuit 23 can also be disconnected by using the switch circuit 234. When the anti-reverse circuit 233 is faulty, the battery module 21 may be reversely discharged. Therefore, disconnecting the path between the input end and the output end of the charging circuit 23 by using the switch circuit 234 can also prevent the battery module 21 from discharging.

For example, because impact caused by a fault of the voltage limiting circuit 231 is large, the switch circuit 234 may be configured to disconnect the path between the input end and the output end of the charging circuit 23 when the voltage limiting circuit 231 is faulty. Refer to FIG. 6. For example, the switch circuit 234 may include a third transistor Q3, where a base of the third transistor Q3 is configured to receive a control signal CNTL, a collector of the third transistor Q3 is connected to the base of the second transistor Q2 through the fifth resistor R5, and an emitter of the third transistor Q3 is connected to the negative electrode of the input end IN of the charging circuit 23, that is, grounded. In other words, the fifth resistor R5 in the current limiting circuit 232 may be connected to the negative electrode of the input end IN of the charging circuit 23 through the third transistor Q3. In a normal case, the control signal CNTL can be used to control the third transistor Q3 to remain in a turned-on state. Correspondingly, the second transistor Q2 in the current limiting circuit 232 remains in a turned-on state, and the battery module 21 can be charged. When it is detected that the voltage limiting circuit 231 is faulty, the control signal CNTL can be used to control the third transistor Q3 to be turned off, so that the second transistor Q2 is turned off. In this way, the path between the input end and the output end of the charging circuit 23 can be disconnected, and the charging circuit 23 cannot charge the battery module 21.

Optionally, the control signal CNTL may be provided by a control circuit in the battery pack 20, and the control circuit may be a control circuit of the DC/DC conversion circuit 22. Alternatively, the charging circuit 23 may further include a detection control circuit. The detection control circuit can detect whether the voltage limiting circuit 231 and the current limiting circuit 232 are faulty, and when detecting that the voltage limiting circuit 231 or the current limiting circuit 232 is faulty, control the third transistor Q3 to be turned off by using the control signal CNTL.

It can be learned from FIG. 6 that the charging circuit provided in embodiments of this application has a simple structure and low costs. This can effectively avoid increasing structural complexity and hardware costs of the energy storage cabinet. It may be understood that the charging circuit 23 shown in FIG. 6 is merely an example, and a structure of the charging circuit 23 may be flexibly adjusted based on a requirement of an application scenario. For example, a connection sequence of the voltage limiting circuit 231 and the current limiting circuit 232 in the charging circuit 23 may be adjusted. Alternatively, the charging circuit 23 may not include the voltage limiting circuit 231 (for example, the voltage limiting circuit 231 may be integrated into the auxiliary power supply 10), may not include the current limiting circuit 232 (for example, the current limiting circuit 232 may be integrated into the auxiliary power supply 10), may not include the anti-reverse circuit 233, or may not include the switch circuit 234. Alternatively, a quantity of diodes connected in series in the current limiting circuit 232 may be flexibly adjusted. Structures of the voltage limiting circuit 231, the current limiting circuit 232, and the anti-reverse circuit 233 in the charging circuit are not limited in embodiments of this application, provided that it is ensured that the foregoing circuits can implement corresponding functions.

It can be learned from the foregoing analysis that, in embodiments of this application, the charging circuit 23 in the energy storage cabinet is a pure hardware circuit, and can be powered by the auxiliary power supply 10 and charge the battery module 21. The foregoing charging process does not require scheduling of the photovoltaic inverter, is not affected by an operating status of the photovoltaic inverter, and does not affect the control logic of the DC/DC conversion circuit 22. In this way, not only control complexity is effectively reduced, but also it can be ensured that the charging circuit 23 can still charge the battery module 21 when the photovoltaic inverter is faulty.

In conclusion, embodiments of this application provide the energy storage cabinet. The energy storage cabinet includes the auxiliary power supply and the plurality of battery packs. Each battery pack includes the battery module, the charging circuit, and the DC/DC conversion circuit. The auxiliary power supply can supply power to the charging circuit, and the charging circuit can charge the battery module. Based on this, even if the DC/DC conversion circuit in the battery pack cannot operate normally due to a fault of the photovoltaic inverter, or cannot operate normally due to an excessively low voltage or power of the direct current bus, the charging circuit can still charge the battery module based on the electric energy provided by the auxiliary power supply, to avoid overdischarge of the battery module due to long-term lack of charging.

Embodiments of this application further provide a battery pack. As shown in FIG. 4, the battery pack 20 includes the auxiliary power supply 10, the battery module 21 (the battery module 21 includes a plurality of cells connected in series), the DC/DC conversion circuit 22, and the charging circuit 23. One end of the DC/DC conversion circuit 22 is configured to connect to the direct current bus, and the other end of the DC/DC conversion circuit 22 is connected to the battery module 21. The input end of the auxiliary power supply 10 is configured to connect to a power supply (FIG. 4 is described by using an example in which the power supply is the direct current bus), the output end of the auxiliary power supply 10 is connected to the input end of the charging circuit 23, and the output end of the charging circuit 23 is connected to the battery module 21.

The auxiliary power supply 10 is configured to obtain electric energy from the power supply and supply power to the charging circuit 23. When the DC/DC conversion circuit 22 stops operating and the voltage of the battery module 21 is lower than the first threshold, the charging circuit 23 is configured to charge the battery module 21. The charging current output by the charging circuit 23 to the battery module 21 is greater than the leakage current of the battery module 21, and the charging current output by the charging circuit 23 to the battery module 21 is less than the charging current output by the DC/DC conversion circuit 22 to the battery module 21 when the DC/DC conversion circuit 22 operates. Based on this, even if the DC/DC conversion circuit in the battery pack cannot operate normally due to a fault of the photovoltaic inverter, or cannot operate normally due to an excessively low voltage or power of the direct current bus, the charging circuit can still charge the battery module based on the electric energy provided by the auxiliary power supply, to compensate for the leakage current of the battery module, and avoid overdischarge of the battery module due to self-discharge in a scenario in which the battery module has not been charged for a long time. It may be understood that, when the DC/DC conversion circuit 22 operates normally, the DC/DC conversion circuit 22 is configured to charge the battery module 21 in a charging mode, and is configured to discharge the battery module 21 in a discharging mode.

Optionally, the first threshold is greater than the discharge cut-off voltage of the battery module 21.

Optionally, the DC/DC conversion circuit 22 stops operating when a voltage of the direct current bus is lower than the minimum startup voltage of the DC/DC conversion circuit 22, or when power of the direct current bus is lower than the minimum startup power of the DC/DC conversion circuit 22. In addition, a minimum startup voltage of the auxiliary power supply 10 is lower than the minimum startup voltage of the DC/DC conversion circuit 22, and minimum startup power of the auxiliary power supply 10 is lower than the minimum startup power of the DC/DC conversion circuit 22.

Optionally, the charging circuit 23 is further configured to stop charging the battery module 21 when the voltage of the battery module 21 reaches the second threshold.

Optionally, the charging voltage output by the charging circuit 23 to the battery module 21 is less than or equal to the rated voltage of the battery module 21.

Optionally, as shown in FIG. 5, the charging circuit 23 includes at least one of the voltage limiting circuit 231, the current limiting circuit 232, and the anti-reverse circuit 233. The voltage limiting circuit 231 is configured to limit the charging voltage output to the battery module 21. The current limiting circuit 232 is configured to limit the charging current output to the battery module 21. The anti-reverse circuit 233 is configured to control unidirectional transmission of electric energy from the input end of the charging circuit 23 to the output end of the charging circuit 23.

It may be understood that the auxiliary power supply 10 is an auxiliary power supply that is in the battery pack 20 and that is configured to supply power to a sampling circuit, a control circuit, a drive circuit, a protection circuit, and the like. In other words, the charging circuit 23 in the battery pack 20 can reuse electric energy provided by the existing auxiliary power supply 10 in the battery pack 20, to charge the battery module 21. This can effectively avoid increasing structural complexity and hardware costs of the battery pack.

It may be further understood that, for a structure and a function of the charging circuit in the battery pack provided in embodiments of this application, refer to related descriptions of the energy storage cabinet in the foregoing embodiments. Details are not described herein again.

It may be further understood that, as shown in FIG. 4, the battery pack 20 provided in embodiments of this application may be used in an energy storage cabinet, and may be used in, for example, the photovoltaic energy storage system shown in FIG. 4. Alternatively, the battery pack 20 may be further used in an energy storage system, and the energy storage system includes an energy storage converter and a plurality of battery packs 20. The energy storage converter includes a DC/AC conversion circuit. The plurality of battery packs 20 are connected in parallel to a direct current bus, the direct current bus is connected to a direct current end of the DC/AC conversion circuit, and an alternating current end of the DC/AC conversion circuit is configured to connect to a power grid or a load. It may be understood that, in the energy storage system, a power supply connected to the auxiliary power supply 10 in the battery pack 20 may be the power grid, that is, the auxiliary power supply 10 is configured to be powered by the power grid.

It may be further understood that the battery pack provided in embodiments of this application has basically same technical effect as the energy storage cabinet provided in the foregoing embodiments. Therefore, for brevity, the technical effect of the battery pack is not described herein again.

Embodiments of this application further provide a photovoltaic energy storage system. As shown in FIG. 1 to FIG. 4, the photovoltaic energy storage system includes the photovoltaic inverter, the auxiliary power supply 10, and the plurality of battery packs 20. The photovoltaic inverter includes the DC/DC conversion circuit and the DC/AC conversion circuit. As shown in FIG. 1 to FIG. 4, the DC/DC conversion circuit in the photovoltaic inverter may be an MPPT circuit. In addition, the input end of the DC/DC conversion circuit in the photovoltaic inverter is configured to connect to the photovoltaic panel (that is, the PV module), the output end is connected to the direct current end of the DC/AC conversion circuit through the direct current bus (BUS), and the alternating current end of the DC/AC conversion circuit is configured to connect to the power grid or the load.

Each of the plurality of battery packs 20 includes the battery module 21, the DC/DC conversion circuit 22, and the charging circuit 23. One end of the DC/DC conversion circuit 22 is configured to connect to the direct current bus, and the other end is configured to connect to the battery module 21. Refer to FIG. 1 to FIG. 4. For example, ends of DC/DC conversion circuits 22 in the plurality of battery packs 20 are connected in parallel to the direct current bus. The input end of the auxiliary power supply 10 is configured to connect to the power supply, the output end of the auxiliary power supply 10 is connected to the input end of the charging circuit 23, and the output end of the charging circuit 23 is connected to the battery module 21.

Refer to FIG. 1 and FIG. 4. The power supply connected to the input end of the auxiliary power supply 10 is the direct current bus. Refer to FIG. 2. Alternatively, the power supply connected to the input end of the auxiliary power supply 10 is the photovoltaic panel. Refer to FIG. 3. Alternatively, the power supply connected to the input end of the auxiliary power supply 10 is the power grid.

The auxiliary power supply 10 is configured to obtain electric energy from the power supply and supply power to the charging circuit 23. When the DC/DC conversion circuit 22 stops operating and the voltage of the battery module 21 is lower than the first threshold, the charging circuit 23 is configured to charge the battery module 21. The charging current output by the charging circuit 23 to the battery module 21 is greater than the leakage current of the battery module 21, and the charging current output by the charging circuit 23 to the battery module 21 is less than the charging current output by the DC/DC conversion circuit 22 to the battery module 21 when the DC/DC conversion circuit 22 operates.

Optionally, the auxiliary power supply 10 and the plurality of battery packs 20 in the foregoing photovoltaic energy storage system may be disposed in the energy storage cabinet provided in the foregoing embodiments. It can be learned, with reference to the foregoing embodiments of the energy storage cabinet, that the auxiliary power supply 10 may be disposed in the battery pack 20, that is, each battery pack 20 is provided with an auxiliary power supply. Alternatively, the auxiliary power supply 10 may be disposed in a BCU, that is, charging circuits 23 in the plurality of battery packs 20 can share one auxiliary power supply.

Alternatively, each of the plurality of battery packs 20 in the photovoltaic energy storage system may be the battery pack provided in the foregoing embodiments, and the auxiliary power supply 10 in the photovoltaic energy storage system is an auxiliary power supply in the battery pack 20.

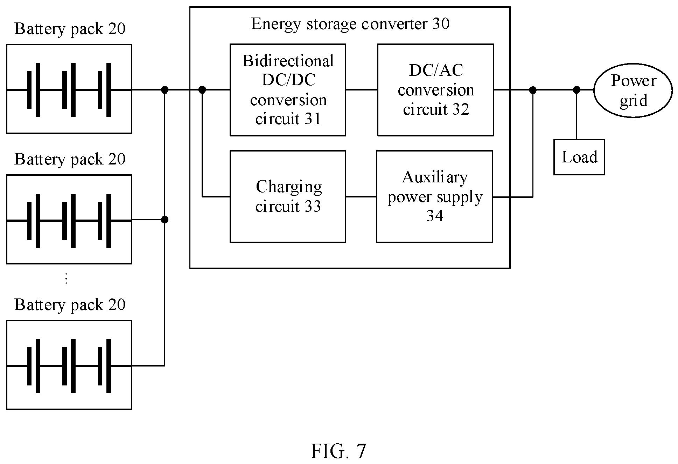

It may be understood that, for structures and operating principles of the auxiliary power supply 10 and the battery pack 20 in the photovoltaic energy storage system, refer to related descriptions of the energy storage cabinet in the foregoing embodiments. Details are not described herein again. In addition, the photovoltaic energy storage system has basically same technical effect as the energy storage cabinet provided in the foregoing embodiments. Therefore, for the purpose of brevity, the technical effect of the photovoltaic energy storage system is not described herein again. Embodiments of this application further provide an energy storage system. As shown in FIG. 7, the energy storage system includes an energy storage converter 30 and a plurality of battery packs 20. As shown in FIG. 7, each of the plurality of battery packs 20 includes a battery module, and the battery module includes a plurality of cells connected in series. The energy storage converter 30 is also referred to as an energy storage inverter or a power conversion system (PCS). Refer to FIG. 7. The energy storage converter includes a DC/DC conversion circuit 31 and a DC/AC conversion circuit 32. One end of the DC/DC conversion circuit 31 is connected to the battery module. For example, battery modules in the plurality of battery packs 20 are connected in parallel to one end of the DC/DC conversion circuit 31. The other end of the DC/DC conversion circuit 31 is connected to a direct current end of the DC/AC conversion circuit 32, and an alternating current end of the DC/AC conversion circuit 32 is configured to connect to a power grid or a load. When the DC/DC conversion circuit 31 operates normally, the DC/DC conversion circuit 31 is configured to implement bidirectional flow of a direct current and voltage conversion, to charge and discharge the battery module in the battery pack 20. The DC/AC conversion circuit 32 is configured to implement bidirectional conversion between a direct current and an alternating current.

Still refer to FIG. 7. The energy storage converter 30 further includes a charging circuit 33 and an auxiliary power supply 34. An input end of the auxiliary power supply 34 is configured to connect to the power grid. Refer to FIG. 7. For example, the input end of the auxiliary power supply 10 may be connected to the alternating current end (that is, a power grid-side port) of the DC/AC conversion circuit 32. An output end of the auxiliary power supply 34 is connected to an input end of the charging circuit 33, and an output end of the charging circuit 33 is connected to the battery module. For example, as shown in FIG. 7, the output end of the charging circuit 33 is connected to one end of the DC/DC conversion circuit 31. Therefore, the plurality of battery packs 20 may be connected in parallel to one end of the DC/DC conversion circuit 31 and connected in parallel to the output end of the charging circuit 33.

In embodiments of this application, the auxiliary power supply 34 is configured to obtain electric energy from the power grid and supply power to the charging circuit 33. When the DC/DC conversion circuit 31 stops operating and a voltage of the battery module is lower than a first threshold, the charging circuit 33 is configured to charge the battery module. A charging current output by the charging circuit 33 to the battery module is greater than a leakage current of the battery module, and the charging current output by the charging circuit 33 to the battery module is less than a charging current output by the DC/DC conversion circuit 31 to the battery module when the DC/DC conversion circuit 31 operates.

It may be understood that, in the energy storage system shown in FIG. 7, when the DC/AC conversion circuit 32 in the energy storage converter 30 is faulty, resulting in no output power at the direct current end of the energy storage converter 30, the DC/DC conversion circuit 31 stops operating, that is, cannot normally charge the battery module in the battery pack 20. After the operating condition is maintained for a specific period of time, the battery module in the battery pack 20 may be overdischarged, and consequently, performance of the battery module may deteriorate. The fault of the DC/AC conversion circuit 32 in the energy storage converter 30 may include a power grid-side fault, an off-grid overload fault, damage to the DC/AC conversion circuit 32, and the like.

In embodiments of this application, because the auxiliary power supply 34 in the energy storage converter 30 can be powered by the power grid and supply power to the charging circuit 33, it can be ensured that when the DC/DC conversion circuit 31 stops operating, the charging circuit 33 can still charge the battery module in the battery pack 20 based on the electric energy provided by the auxiliary power supply 34, to avoid overdischarge of the battery module.

It may be understood that, for structures and operating principles of the auxiliary power supply 34 and the charging circuit 33 in the foregoing energy storage system, refer to related descriptions of the energy storage cabinet in the foregoing embodiments. Details are not described herein again. In addition, the energy storage system provided in embodiments of this application has basically same technical effect as the energy storage cabinet provided in the foregoing embodiments. Therefore, for brevity, the technical effect of the energy storage system is not described herein again.

Optionally, both the photovoltaic energy storage system and the energy storage system provided in embodiments of this application may be residential energy storage systems, and may be low-voltage energy storage systems. For example, a direct current voltage level of the low-voltage energy storage system may be less than or equal to 48 V, that is, a rated voltage of the battery pack 20 in the system may be less than or equal to 48 V. It may be understood that, in the solutions provided in this application, the auxiliary power supply charges the battery module in the battery pack through the charging circuit. However, the auxiliary power supply is usually configured to supply power to circuits such as a controller and a drive circuit, and an output voltage of the auxiliary power supply is usually low. For example, the output voltage of the auxiliary power supply is usually 24 V or 48 V. Therefore, if a voltage of the battery pack in the photovoltaic energy storage system or the energy storage system is high, the charging circuit cannot effectively charge the battery module in the battery pack based on the electric energy provided by the auxiliary power supply. However, for the low-voltage energy storage system, it can be ensured that the charging circuit can effectively charge the battery module in the battery pack based on the voltage output by the auxiliary power supply.

Embodiments of this application further provide an energy storage converter. As shown in FIG. 7, an energy storage converter 30 includes a DC/DC conversion circuit 31, a DC/AC conversion circuit 32, a charging circuit 33, and an auxiliary power supply 34. One end of the DC/DC conversion circuit 31 is configured to connect to a battery pack 20. For example, a plurality of battery packs 20 are connected in parallel to one end of the DC/DC conversion circuit 31. The other end of the DC/DC conversion circuit 31 is connected to a direct current end of the DC/AC conversion circuit 32, and an alternating current end of the DC/AC conversion circuit 32 is configured to connect to a power grid or a load. When the DC/DC conversion circuit 31 operates normally, the DC/DC conversion circuit 31 is configured to implement bidirectional flow of a direct current and voltage conversion, to charge and discharge the battery module in the battery pack 20. The DC/AC conversion circuit 32 is configured to implement bidirectional conversion between a direct current and an alternating current.

An input end of the auxiliary power supply 34 is configured to connect to the power grid, an output end of the auxiliary power supply 34 is connected to an input end of the charging circuit 33, and an output end of the charging circuit 33 is connected to the battery pack 20. The auxiliary power supply 34 is configured to obtain electric energy from the power grid and supply power to the charging circuit 33. When the DC/DC conversion circuit 31 stops operating and a voltage of the battery pack 20 is lower than a first threshold, the charging circuit 33 is configured to charge the battery pack 20. A charging current output by the charging circuit 33 to the battery module is greater than a leakage current of the battery module, and the charging current output by the charging circuit 33 to the battery module is less than a charging current output by the DC/DC conversion circuit 31 to the battery module when the DC/DC conversion circuit 31 operates.

It may be understood that, for structures and operating principles of the auxiliary power supply 34 and the charging circuit 33 in the foregoing energy storage converter 30, refer to related descriptions of the energy storage cabinet in the foregoing embodiments. Details are not described herein again. In addition, the energy storage converter has basically same technical effect as the energy storage cabinet provided in the foregoing embodiments. Therefore, for the purpose of brevity, the technical effect of the energy storage converter is not described herein again.

In embodiments of this application, terms "first", "second", and "third" are merely used for description, but shall not be understood as an indication or implication of relative importance. The term "at least one" means one or more, and "a plurality of" means two or more.

The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between associated objects.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. An energy storage cabinet, wherein the energy storage cabinet comprises an auxiliary power supply and a plurality of battery packs;
each of the plurality of battery packs comprises a battery module, a DC/DC conversion circuit, and a charging circuit, one end of the DC/DC conversion circuit is configured to connect to a direct current bus, and the other end is connected to the battery module;
an input end of the auxiliary power supply is configured to connect to a power supply, an output end of the auxiliary power supply is connected to an input end of the charging circuit, and an output end of the charging circuit is connected to the battery module;
the auxiliary power supply is configured to obtain electric energy from the power supply and supply power to the charging circuit; and when the DC/DC conversion circuit stops operating and a voltage of the battery module is lower than a first threshold, the charging circuit is configured to charge the battery module; and
a charging current output by the charging circuit to the battery module is greater than a leakage current of the battery module, and the charging current output by the charging circuit to the battery module is less than a charging current output by the DC/DC conversion circuit to the battery module when the DC/DC conversion circuit operates.

2. The energy storage cabinet according to claim 1, wherein the first threshold is greater than a discharge cut-off voltage of the battery module.

3. The energy storage cabinet according to claim 1 or 2, wherein the DC/DC conversion circuit stops operating when a voltage of the direct current bus is lower than a minimum startup voltage of the DC/DC conversion circuit, or the DC/DC conversion circuit stops operating when power of the direct current bus is lower than minimum startup power of the DC/DC conversion circuit; and
a minimum startup voltage of the auxiliary power supply is lower than the minimum startup voltage of the DC/DC conversion circuit, and minimum startup power of the auxiliary power supply is lower than the minimum startup power of the DC/DC conversion circuit.

4. The energy storage cabinet according to any one of claims 1 to 3, wherein the charging circuit is further configured to stop charging the battery module when the voltage of the battery module reaches a second threshold, and the second threshold is greater than or equal to the first threshold and is less than a rated voltage of the battery module.

5. The energy storage cabinet according to any one of claims 1 to 4, wherein the energy storage cabinet further comprises a control box, the control box comprises a housing and a battery control unit, BCU, the auxiliary power supply and the BCU are located in the housing, the BCU is electrically connected to the battery pack, and the BCU is electrically connected to the auxiliary power supply.

6. The energy storage cabinet according to any one of claims 1 to 4, wherein the auxiliary power supply is located in the battery pack.

7. The energy storage cabinet according to any one of claims 1 to 6, wherein a charging voltage output by the charging circuit to the battery module is less than or equal to the rated voltage of the battery module.

8. The energy storage cabinet according to any one of claims 1 to 7, wherein the charging circuit comprises at least one of a voltage limiting circuit, a current limiting circuit, and an anti-reverse circuit; and
the voltage limiting circuit is configured to limit the charging voltage output to the battery module, the current limiting circuit is configured to limit the charging current output to the battery module, and the anti-reverse circuit is configured to control unidirectional transmission of electric energy from the input end of the charging circuit to the output end of the charging circuit.

9. The energy storage cabinet according to claim 8, wherein the charging circuit comprises the voltage limiting circuit, the current limiting circuit, and the anti-reverse circuit that are sequentially connected between the input end and the output end of the charging circuit;
the voltage limiting circuit comprises a capacitor, a first transistor, a voltage regulator chip, a first resistor, a second resistor, and a third resistor, wherein the capacitor is connected between a positive electrode and a negative electrode of the input end of the charging circuit, a collector of the first transistor is connected to the positive electrode of the input end of the charging circuit, a base of the first transistor is connected to a cathode of the voltage regulator chip, an anode of the voltage regulator chip is connected to the negative electrode of the input end of the charging circuit, the first resistor is connected between the positive electrode of the input end of the charging circuit and the base of the first transistor, the second resistor and the third resistor are connected in series between an emitter of the first transistor and the negative electrode of the input end of the charging circuit, and a series node between the second resistor and the third resistor is connected to a reference electrode of the voltage regulator chip;
the current limiting circuit comprises a fourth resistor, a second transistor, a fifth resistor, a first diode, and a second diode, wherein the fourth resistor is connected between the emitter of the first transistor and an emitter of the second transistor, a base of the second transistor is connected to the negative electrode of the input end of the charging circuit through the fifth resistor, and the first diode and the second diode are connected in series between the emitter of the first transistor and the base of the second transistor; and
the anti-reverse circuit comprises a third diode, wherein an anode of the third diode is connected to a collector of the second transistor, and a cathode of the third diode is configured to connect to the battery module.

10. The energy storage cabinet according to claim 8 or 9, wherein the charging circuit further comprises a switch circuit, and the switch circuit is configured to disconnect a path between the input end and the output end of the charging circuit when the voltage limiting circuit, the current limiting circuit, or the anti-reverse circuit is faulty.

11. A battery pack, wherein the battery pack comprises an auxiliary power supply, a battery module, a DC/DC conversion circuit, and a charging circuit, one end of the DC/DC conversion circuit is configured to connect to a direct current bus, and the other end is connected to the battery module;
an input end of the auxiliary power supply is configured to connect to a power supply, an output end of the auxiliary power supply is connected to an input end of the charging circuit, and an output end of the charging circuit is connected to the battery module;
the auxiliary power supply is configured to obtain electric energy from the power supply and supply power to the charging circuit, and when the DC/DC conversion circuit stops operating and a voltage of the battery module is lower than a first threshold, the charging circuit is configured to charge the battery module; and
a charging current output by the charging circuit to the battery module is greater than a leakage current of the battery module, and the charging current output by the charging circuit to the battery module is less than a charging current output by the DC/DC conversion circuit to the battery module when the DC/DC conversion circuit operates.

12. A photovoltaic energy storage system, wherein the photovoltaic energy storage system comprises a photovoltaic inverter, a plurality of battery packs, and an auxiliary power supply;
the photovoltaic inverter comprises a DC/DC conversion circuit and a DC/AC conversion circuit, wherein an input end of the DC/DC conversion circuit in the photovoltaic inverter is configured to connect to a photovoltaic panel, an output end is connected to a direct current end of the DC/AC conversion circuit through a direct current bus, and an alternating current end of the DC/AC conversion circuit is configured to connect to a power grid or a load;
each of the plurality of battery packs comprises a battery module, a DC/DC conversion circuit, and a charging circuit, wherein one end of the DC/DC conversion circuit in the battery pack is configured to connect to the direct current bus, and the other end is connected to the battery module;
an input end of the auxiliary power supply is configured to connect to a power supply, an output end of the auxiliary power supply is connected to an input end of the charging circuit, an output end of the charging circuit is connected to the battery module, and the power supply is the photovoltaic panel, the direct current bus, or the power grid;
the auxiliary power supply is configured to obtain electric energy from the power supply and supply power to the charging circuit; and when the DC/DC conversion circuit stops operating and a voltage of the battery module is lower than a first threshold, the charging circuit is configured to charge the battery module; and
a charging current output by the charging circuit to the battery module is greater than a leakage current of the battery module, and the charging current output by the charging circuit to the battery module is less than a charging current output by the DC/DC conversion circuit to the battery module when the DC/DC conversion circuit operates.

13. An energy storage system, wherein the energy storage system comprises an energy storage converter and a plurality of battery packs;
each of the plurality of battery packs comprises a battery module;
the energy storage converter comprises a DC/DC conversion circuit, a DC/AC conversion circuit, an auxiliary power supply, and a charging circuit, one end of the DC/DC conversion circuit is connected to the battery module, the other end is connected to a direct current end of the DC/AC conversion circuit, and an alternating current end of the DC/AC conversion circuit is configured to connect to a power grid or a load;
an input end of the auxiliary power supply is configured to connect to the power grid, an output end of the auxiliary power supply is connected to an input end of the charging circuit, and an output end of the charging circuit is connected to the battery module;
the auxiliary power supply is configured to obtain electric energy from the power grid and supply power to the charging circuit; and when the DC/DC conversion circuit stops operating and a voltage of the battery module is lower than a first threshold, the charging circuit is configured to charge the battery module; and
a charging current output by the charging circuit to the battery module is greater than a leakage current of the battery module, and the charging current output by the charging circuit to the battery module is less than a charging current output by the DC/DC conversion circuit to the battery module when the DC/DC conversion circuit operates.
